# EUROPEAN PATENT SPECIFICATION

(11) **EP 2 403 036 B1**
(45) Date of publication and mention of the grant of the patent: **02.10.2013**
(21) Application number: 11158033.8
(22) Date of filing: 14.03.2011
(51) Int. Cl.: H01M 2/22, H01M 2/26, H01M 2/34

(54) **Rechargeable battery**
Wiederaufladbare Batterie
Batterie rechargeable

(30) Priority: 30.06.2010 US 360258 P; 08.02.2011 US 201113023452
(43) Date of publication of application: 04.01.2012
(73) Proprietor: Samsung SDI Co., Ltd., Gyeonggi-do (KR); Robert Bosch GmbH, 70442 Stuttgart (DE)
(72) Inventor: Byun, Sangwon, Gyeonggi-do (KR)
(74) Representative: Gulde Hengelhaupt Ziebig & Schneider

(56) References cited:
- EP-A1- 2 273 587
- EP-A1- 2 287 942
- US-A1- 2006 019 158
- US-A1- 2006 019 159

## Description

### TECHNICAL FIELD

The present invention relates to a rechargeable battery.

### BACKGROUND ART

Unlike a primary battery, a rechargeable battery may be repeatedly chargeable and dischargeable. Low capacity batteries having a single battery cell packaged in a pack type are used for various portable electronic devices such as cellular phones or camcorders. High capacity batteries are used as the power source for motor drive, such as in hybrid electric vehicles.

The rechargeable batteries may be classified into different types, for example, cylindrical batteries and prismatic batteries. The rechargeable battery is generally constructed by accommodating an electrode assembly having a positive electrode and a negative electrode with a separator as an insulator interposed there between in a case together with an electrolyte, and connecting a cap assembly having electrode terminals to the case.

When excessive heat is generated or an electrolyte is decomposed in a battery, the internal pressure of the battery may rise, resulting in explosion and fire. Accordingly, there is a need for a rechargeable battery configured to improve reliability.

### SUMMARY OF THE INVENTION

Embodiments of the present invention provide a rechargeable battery including a collector plate having a fuse hole and a fuse protrusion, which can increase the reliability of the fuse hole in view of its functionality as a fuse while strengthening a fuse hole section, thereby improving safety of the rechargeable battery.

In order to accomplish these aspects, the present invention provides a rechargeable battery according to claim 1.

As described above, the rechargeable battery according to the present invention includes a collector plate having a fuse hole and a fuse protrusion, thereby strengthening a section where a fuse hole is formed and increasing a duration of time in which a current flows through the fuse protrusion by allowing the current to detour to the fuse protrusion when an electrical short-circuit occurs.

Therefore, in rechargeable battery according to the present invention, it is possible to prevent the fuse hole from losing its functionality as a fuse by preventing warping or damages of the section where the fuse hole is formed due to external shocks if there is no electrical short-circuit occurred.

The at least one fuse protrusion is preferably bent with respect to a surface of the fuse section in which the fuse hole is formed. Even more preferably, the at least one fuse protrusion is bent perpendicular from the width direction of the fuse hole.

Preferably, a terminal hole is formed in the connection part.

A cross-sectional area of the fuse section is preferably smaller than a cross-sectional area of other portions of the at least one collector plate. A minimum distance between a starting portion of the fuse protrusion and the fuse hole ranges from 1 mm to 5 mm.

Furthermore, a width of the fuse section is preferably greater than a width of the part where the fuse section is provided on, i.e. the connection part or the extension part.

The at least one collector plate may comprise two fuse protrusions located on opposite end portions of the fuse section.

The connection part and/or the extension part may have a plate shape.

The at least one fuse protrusion preferably further comprises at least one first auxiliary groove formed on its side surface.

The fuse hole may be elongated in a width direction extending toward the at least one fuse protrusion.

A lengthwise extension of the at least one fuse protrusion may be greater than a lengthwise extension of the fuse hole.

The cap assembly may further comprise a first electrode terminal passing through the cap plate and contacting a first collector plate, and a second electrode terminal passing through the cap plate and contacting a second collector plate, wherein the at least one fuse protrusion is bent toward or away from the cap assembly. Additionally or alternatively, the at least one fuse protrusion is bent toward or away from the case.

The cap assembly may comprise a convex reversible first short circuit plate accommodated in a short circuit opening on the cap plate, and a second short circuit plate electrically coupled to one of the collector plates and located on an exterior of the case, the second short circuit plate being spaced apart from the cap plate and covering the short circuit hole.

Further provided may be a vehicle having the rechargeable battery according to the invention.

### BRIEF DESCRIPTION OF THE DRAWINGS

FIG. 1 is a perspective view of a rechargeable battery according to an embodiment of the present invention;
FIG. 2 is a cross-sectional view of the rechargeable battery, taken along the line I-I' of FIG. 1;
FIG. 3A is a perspective view of a first collector plate shown in FIG. 2;
FIG. 3B is a perspective view of an alternative example of the first collector plate shown in FIG. 3A;
FIG. 4 is a partial cross-sectional view of the first collector plate, taken along the line II-II' of FIG. 3A;
FIG. 5 is a partial plan view of part of the first collector plate shown in FIG. 3A;
FIG. 6 is a perspective view of a rechargeable battery according to another embodiment not belonging to the present invention;
FIG. 7 is a perspective view of a first collector plate shown in FIG. 6;
FIG. 8 is a partial cross-sectional view of the first collector plate, taken along the line III-III' of FIG. 7; and
FIG. 9 is a perspective view of a first collector plate corresponding to that of FIG. 3A in a rechargeable battery according to still another embodiment of the present invention.

### DETAILED DESCRIPTION OF THE DRAWINGS

Example embodiments will now be described more fully hereinafter with reference to the accompanying drawings.

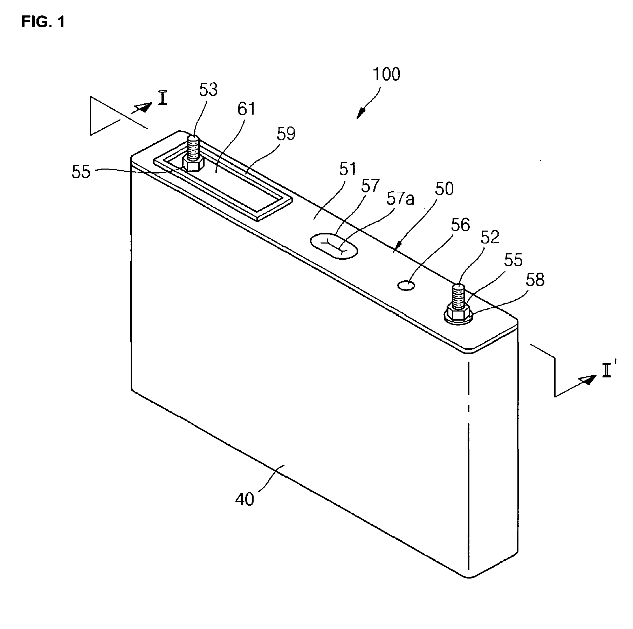

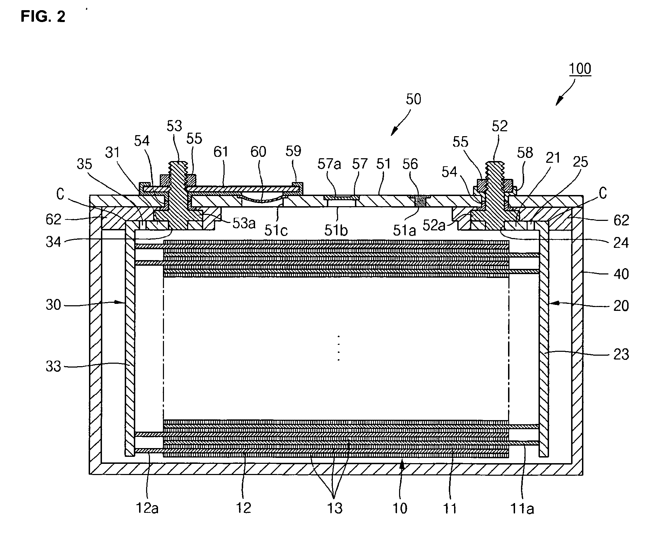

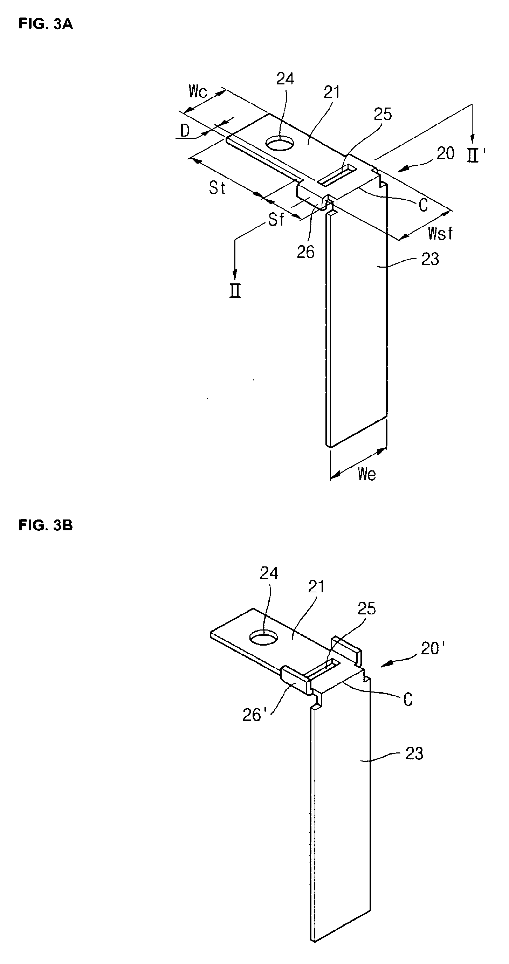

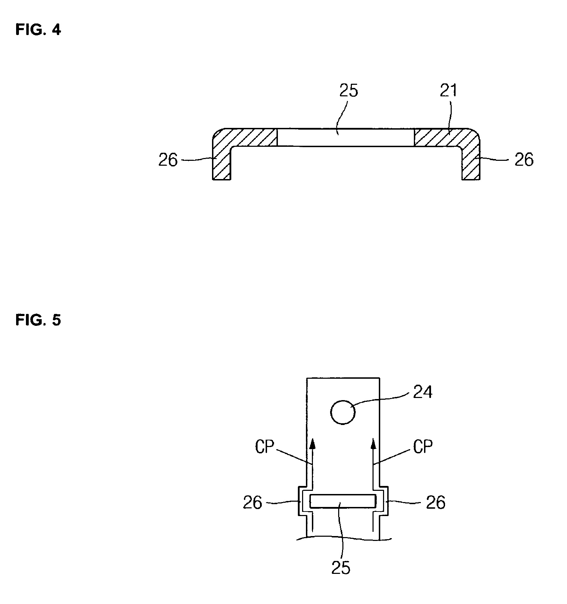

FIG. 1 is a perspective view of a rechargeable battery according to an embodiment of the present invention, FIG. 2 is a cross-sectional view of the rechargeable battery, taken along the line I-I' of FIG. 1, FIG. 3A is a perspective view of a first collector plate shown in FIG. 2, FIG. 3B is a perspective view of an alternative example of the first collector plate shown in FIG. 3A, FIG. 4 is a partial cross-sectional view of the first collector plate, taken along the line II-II' of FIG. 3A, and FIG. 5 is a partial plan view of part of the first collector plate shown in FIG. 3A.

Referring to FIGS. 1 and 2, the rechargeable battery 100 includes at least one electrode assembly 10, a first collector plate 20, a second collector plate 30, a case 40 and a cap assembly 50.

The electrode assembly 10 is formed by spirally winding or stacking a stacked structure including a first electrode plate 11 shaped of a thin plate or film, a separator 13 and a second electrode plate 12. The first electrode plate 11 may serve as a positive electrode and the second electrode plate 12 may serve as a negative electrode.

The first electrode plate 11 is formed by coating a first electrode active material such as a transition metal oxide on a first electrode collector made of a metal foil such as aluminum, and includes a first electrode uncoated portion 11a on which the first electrode active material is not coated. The first electrode uncoated portion 11 a is a current flow path between the first electrode plate 11 and the outside of the first electrode plate 11. The material of the first electrode plate 11 is not limited to the specific material listed herein.

The second electrode plate 12 is formed by coating a second electrode active material such as a graphite or carbon on a second electrode collector made of a metal foil such as nickel or copper, and includes a second electrode uncoated portion 12a on which the second electrode active material is not coated. The second electrode uncoated portion 12a is a current flow path between the second electrode plate 12 and the outside of the second electrode plate 12. The material of the second electrode plate 12 is not limited to the specific material listed herein.

Polarities of the first electrode plate 11 and the second electrode plate 12 may be reversed.

The separator 13, positioned between the positive and negative electrodes 11 and 12, prevents an electrical short-circuit there between and allows movement of lithium ions. The separator 13 may be made of polyethylene, polypropylene, or a composite film of polyethylene and polypropylene. However, the material of the separator 13 is not limited to the specific material listed herein.

The first collector plate 20 and the second collector plate 30 are coupled to both ends of the electrode assembly 10 to be electrically connected to the first electrode plate 11 and the second electrode plate 12, respectively.

The first collector plate 20 is formed of a conductive material such as aluminum, and contacts the first electrode uncoated portion 11a protruding to one end of the electrode assembly 10 to then be electrically connected to the first electrode plate 11. Referring to FIGS. 2 and 3A, the first collector plate 20 may include a first connection part 21, a first extension part 23, a first terminal hole 24, a first fuse hole 25, and a first fuse protrusion 26.

The first connection part 21 is provided between an upper portion of the electrode assembly 10 and a lower portion of the cap assembly 50, and is shaped of a plate. The first connection part 21 may have a first connection width Wc. Here, the first connection part 21 may be defined by a first terminal section St providing an area where the first terminal hole 24 is formed, and a first fuse section Sf providing an area where the first fuse hole 25 is formed.

The first extension part 23 is bent and extends from an end of the first connection part 21 and is formed in a plate shape substantially contacting the first electrode uncoated portion 11a. In addition, the first extension part 23 may have a first extension width We greater than the first connection width Wc. Let the corner at which the first connection part 21 and the first extension part 23 meet be referred to as 'C.' The first connection part 21 and the first extension part 23 may be perpendicular to each other about the corner C. The reason why the first connection width Wc is smaller than the first extension width We is to allow internal gases of the rechargeable battery 100 to easily move toward a vent plate 57 opened when the internal pressure of the rechargeable battery 100 is greater than or equal to a predefined pressure.

The first terminal hole 24 is formed at one side of the first connection part 21, that is, at the first terminal section St, and provides for a space in the first connection part 21, where a first electrode terminal 52 of the cap assembly 50 is inserted into and coupled to the first terminal hole 24. In the first connection part 21, the first terminal section St is positioned to be far away from the corner C.

The first fuse hole 25 and the first fuse protrusion 26 are formed on the electrode assembly 10, that is, on the first fuse section Sf of the first connection part 21 so as not to make a contact with an electrolyte. This is to prevent the electrolyte from causing a fire due to a heat generated from the first fuse section Sf where the first fuse hole 25 and the first fuse protrusion 26 are formed. Here, the first fuse section Sf is positioned in the close proximity of the corner C of the first connection part 21, so that the first fuse hole 25 and the first fuse protrusion 26 may not overlap the first electrode terminal 52 coupled to the first terminal hole 24. The width Wc of the first connection part 21 is preferably smaller than the width Wsf of the first fuse section Sf.

In detail, the first fuse hole 25 is formed to pass through the first connection part 21. The first fuse hole 25 allows a section where the first fuse hole 25 is formed to have a smaller cross-sectional area than other sections. The first fuse hole 25 may have a square shape, for example, a rectangular shape elongated in a widthwise direction of the first connection part 21, but aspects of the present invention are not limited thereto. The first fuse hole 25 functions as a fuse that cuts off the flow of a current by allowing the section where the first fuse hole 25 is formed to be melted by heat generated when an electrical short-circuit occurs to the rechargeable battery 100 and a large amount of current flows through the rechargeable battery 100. The electrical short-circuit may be caused by bringing a first short-circuit plate 60 and a second short-circuit plate 61 into a contact with each other when the rechargeable battery 100 is overcharged to generate heat or the internal pressure of the rechargeable battery 100 exceeds a predefined pressure due to decomposition of electrolyte. Accordingly, the section where the first fuse hole 25 is formed is melted and breaks using the electrical short-circuit caused due to the over-charge of the rechargeable battery 100 to interrupt the current flow, thereby interrupting a charging or discharging operation of the rechargeable battery 100 to avoid risks, such as fire or explosion.

The first fuse protrusion 26 is bent from an end of the first fuse section Sf and extends toward the electrode assembly 10. At least one of the first fuse protrusion 26 may be formed in either the left or right side of the first fuse hole 25. The first fuse protrusion 26 is bent in the vicinity of the first fuse hole 25. In other words, the first fuse protrusion 26 firstly extends from a side face of the connection part 21 parallel to the top surface of the connection part 21 and then bents in a direction different from the width direction of the connection part 21. In yet other words, the first fuse protrusion 26 has the shape of a letter "L", the base of the "L" extending parallel to the width direction of the connection part 21. Thus, the first fuse protrusion 26 increases the width of the first fuse section Sf with respect to the width of the adjacent connecting part 21. The first fuse protrusion 26 strengthens the section where the first fuse hole 25 is formed. Therefore, in a case where an electrical short-circuit does not occur to the rechargeable battery 100 due to low mechanical resistance of the section where the first fuse hole 25 is formed against external shocks, the first fuse protrusion 26 may prevent the section where the first fuse hole 25 is formed from being warped or damaged due to the external shocks. In addition, the first fuse protrusion 26 forms a current path CP together with the first connection part 21 and the first extension part 23. The first fuse protrusion 26 allows a current flowing between the first connection part 21 and the first extension part 23 to detour to the first fuse protrusion 26, thereby increasing a duration of time in which the current flows through a narrow area. Accordingly, the first fuse protrusion 26 allows a larger amount of heat to be generated due to the electrical short-circuit of the rechargeable battery 100, thereby increasing the reliability of the first fuse hole 25 in view of its functionality as a fuse. In the first fuse section Sf, a distance D between a starting portion of the first fuse protrusion 26 and the first fuse hole 25 may range from approximately 1 mm to approximately 5 mm. When the distance D between the starting portion of the first fuse protrusion 26 and the first fuse hole 25 is smaller than 1 mm, the fuse functionality of the first fuse hole 25 may increase, suggesting that the strengthening capability of the first fuse protrusion 26 may be comparatively lowered. However, when the distance D between the starting portion of the first fuse protrusion 26 and the first fuse hole 25 is greater than 5 mm, the fuse functionality of the first fuse hole 25 may be lowered whereas the strengthening capability of the first fuse protrusion 26 may increase. Although FIG. 3A shows that the first fuse protrusion 26 of the first collector plate 20 is bent and extends toward a lower portion of the first collector plate 120, that is, toward the electrode assembly 10, to suppress the first fuse protrusion 26 from being interfered by other components of the cap assembly 50, but aspects of the present invention are not limited thereto. That is to say, as shown in FIG. 3B, a first fuse protrusion 26' of a first collector plate 20' may be bent and extend toward an upper portion of the first collector plate 120', that is, toward the cap assembly 50.

The second collector plate 30 is formed of a conductive material such as nickel or copper, and may be electrically connected to the second electrode plate 12 when contacting the second electrode uncoated portion 12a protruding to the other end of the electrode assembly 10. The second collector plate 30 may include a second connection part 31, a second extension part 33, a second terminal hole 34, a second fuse hole 35, and a second fuse protrusion (not shown).

Since a configuration of the second collector plate 30 is substantially the same that of the first collector plate 20 shown in FIG. 3A, duplicated descriptions thereof will be omitted. Here, the second collector plate 30 may not have the second fuse hole 35 and the second fuse protrusion corresponding to the first fuse hole 25 and the first fuse protrusion 26. This is because the first collector plate 20 of the current embodiment has the first fuse hole 25 functioning as a fuse. In addition, since the first collector plate 20 made of, for example, aluminum, has a lower melting point than the second collector plate 30 made of, for example, nickel, the fuse functionality of the first collector plate 20 can be more easily realized than that of the second collector plate 30. However, in a case where the first fuse hole 25 of the first collector plate 20 does not properly perform its functionality as a fuse, the second fuse hole 35 of the second collector plate 30 allows the fuse functionality to be maintained in the rechargeable battery 100 as a whole. Alternatively, the second collector plate 30 may include the second fuse hole 35 and the second fuse protrusion without forming the first fuse hole 25 and the first fuse protrusion 26 in the first collector plate 20.

The case 40 is formed of a conductive metal such as aluminum, aluminum alloy or nickel plated steel, and has a substantially prismatic shape having an opening in which the electrode assembly 10, the first collector plate 20 and the second collector plate 30 are inserted and settled. Although FIG. 2 illustrates a state in which the case 40 and the cap assembly 50 are assembled and the opening is not illustrated, the opening is a practically opened peripheral portion of the cap assembly 50. An internal surface of the case 40 is subjected to insulating treatment, so that it is insulated from the electrode assembly 10, the first collector plate 20, the second collector plate 30 and the cap assembly 50. The case 40 may be given a polarity. That is, the case 40 may serve as a positive electrode, for example.

The cap assembly 50 is coupled to the case 40. In detail, the cap assembly 50 may include a cap plate 51, a first electrode terminal 52, a second electrode terminal 53, a gasket 54, and a nut 55. The cap assembly 50 may further include a plug 56, a vent plate 57, a connection plate 58, an upper insulation member 59, a first short-circuit plate 60, a second short-circuit plate 61, and a lower insulation member 62.

The cap plate 51 seals the opening of the case 40 and may be made of the same material as the case 40. The cap plate 51 may have the same polarity as the case 40.

The first electrode terminal 52 passes through one side of the cap plate 51 and is electrically connected to the first collector plate 20. The first electrode terminal 52 may be shaped of a pillar, and a thread may be formed on the outer circumference of an upper part of the pillar exposed beyond the cap plate 51. A flange 52a may be formed on a lower part of the pillar located at the lower portion of the cap plate 51 to prevent the first electrode terminal 52 from slip away from the cap plate 51. In the first electrode terminal 52, part of the pillar positioned below the flange 52a is inserted into the first terminal hole 24 of the first collector plate 20. The first electrode terminal 52 may be electrically connected to the cap plate 51.

The second electrode terminal 53 passes through the other side of the cap plate 51 and is electrically connected to the second collector plate 30. Since the second electrode terminal 53 has substantially the same configuration as the first electrode terminal 52 except that the second electrode terminal 53 is insulated from the cap plate 51, duplicated descriptions thereof will be omitted.

The gasket 54 is formed between each of the first electrode terminal 52 and the second electrode terminal 53 and the cap plate 51 using an insulating material, and hermetically seals gaps between each of the first electrode terminal 52 and the second electrode terminal 53 and the cap plate 51. The gasket 54 prevents external moisture from infiltrating into the rechargeable battery 100 or an electrolyte contained inside the rechargeable battery 100 from flowing out.

The nut 55 is engaged with the thread formed on each of the first electrode terminal 52 and the second electrode terminal 53 and fixes the first electrode terminal 52 and the second electrode terminal 53 to the cap plate 51, respectively.

The plug 56 seals an electrolyte injection hole 51a of the cap plate 51. The vent plate 57 provided in the vent hole 51 b of the cap plate 51 and includes a notch 57a configured to be opened at a predefined pressure.

The connection plate 58 is formed to be inserted into a space between the first electrode terminal 52 and the cap plate 51 and closely contacts the cap plate 51 and the gasket 54 through the nut 55. The connection plate 58 electrically connects the first electrode terminal 52 and the cap plate 51 to each other.

The upper insulation member 59 is formed to be inserted into a space between the second electrode terminal 53 and the cap plate 51 and closely contacts the cap plate 51 and the gasket 54. The upper insulation member 59 insulates the second electrode terminal 53 and the cap plate 51 from each other.

In the short-circuit hole 51c of the cap plate 51, the first short-circuit plate 60 is disposed between the upper insulation member 59 and the cap plate 51. The first short-circuit plate 60 may be an inverted plate having a rounded portion that is downwardly convex, and an edge portion fixed to the cap plate 51. The first short-circuit plate 60 may be inverted to be upwardly convex when the internal pressure of the rechargeable battery 100 exceeds a predefined pressure due to over-charge of the rechargeable battery 100. The first short-circuit plate 60 may have the same polarity with the cap plate 51.

The second short-circuit plate 61 is formed such that the second electrode terminal 53 is inserted from an exterior side spaced apart from the cap plate 51, that is, on the upper insulation member 59 and extends to cover the short-circuit hole 51c. The second short-circuit plate 61 is electrically connected to the second electrode terminal 53. The second short-circuit plate 61 comes into contact with the first short-circuit plate 60 that convexly protrudes upwardly when the internal pressure of the rechargeable battery 100 exceeds a predefined pressure due to over-charge of the rechargeable battery 100, thereby causing an electrical short-circuit to the rechargeable battery 100. When the electrical short-circuit is caused to the rechargeable battery 100, a large amount of current flows through the rechargeable battery 100 to generate heat. Here, the first fuse hole 25 or the second fuse hole 35 performs a fuse function, thereby improving the safety of the rechargeable battery 100.

The lower insulation member 62 is disposed between each of the first collector plate 20 and the second collector plate 30 and the cap plate 51, and prevents unnecessary electrical short-circuit from being caused to the rechargeable battery 100.

As described above, the rechargeable battery 100 according to an embodiment of the present invention includes the first collector plate 20 having the first fuse hole 25 and the first fuse protrusion 26 and/or the second collector plate 30 having the second fuse hole 35 and the second fuse protrusion, strength of a section where the first fuse hole 25 or the second fuse hole 35 is formed may be reinforced. When an electrical short-circuit occurs to the rechargeable battery 100, a duration of time in which a current flows through the first fuse protrusion 26 or the second fuse protrusion can be increased by allowing the current to detour to the first fuse protrusion 26 or the second fuse protrusion.

If there is no electrical short-circuit occurred to the rechargeable battery according to the embodiment of the present invention, the first fuse hole 25 can be prevented from losing its functionality as a fuse by preventing warping or damages of the section where the first fuse hole 25 or the second fuse hole 35 is formed due to external shocks. Once the electrical short-circuit occurs, the reliability of the first fuse hole 25 or the second fuse hole 35 can be increased in view of its functionality as a fuse, thereby improving the safety of the rechargeable battery 100.

A rechargeable battery according to another embodiment of the present invention will now be described.

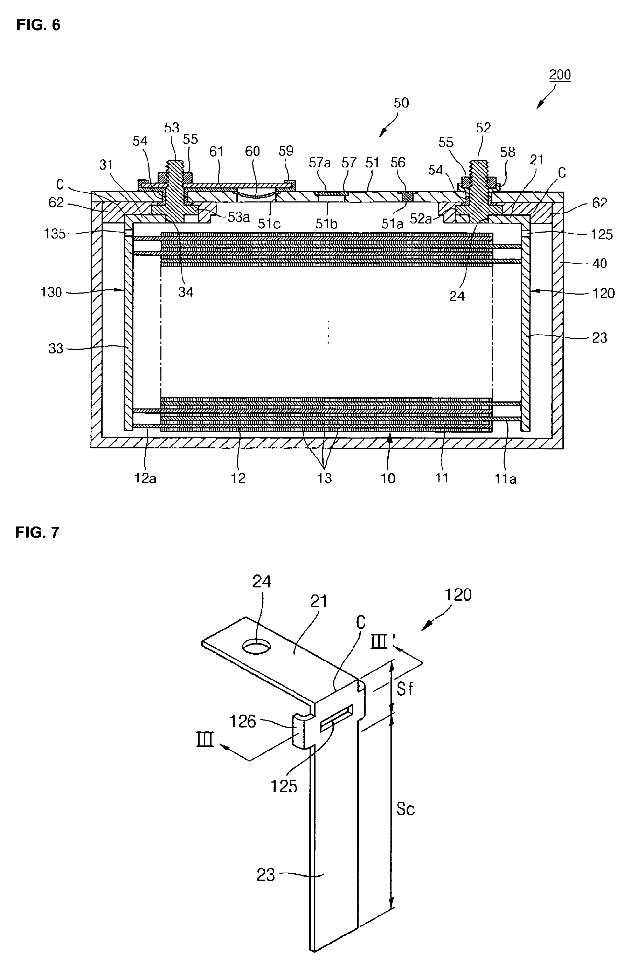

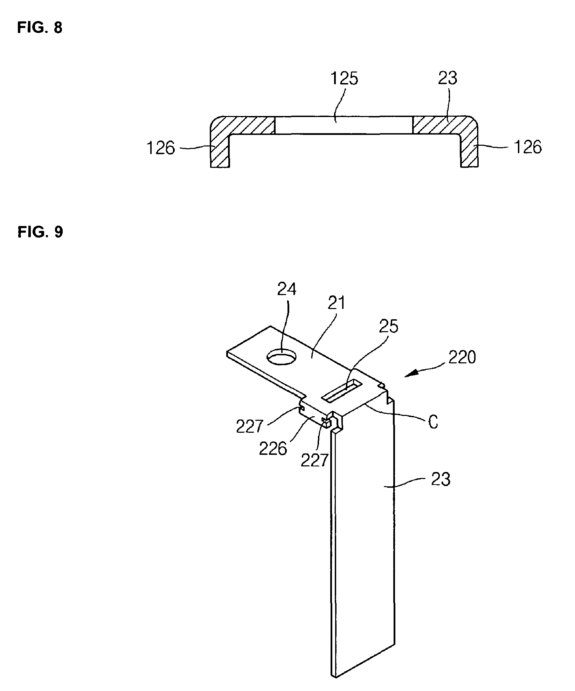

FIG. 6 is a perspective view of a rechargeable battery according to another embodiment not belonging to the invention, FIG. 7 is a perspective view of a first collector plate shown in FIG. 6, and FIG. 8 is a partial cross-sectional view of the first collector plate, taken along the line III-III' of FIG. 7.

Since configurations and functions of the rechargeable battery 200 are substantially the same as those of the rechargeable battery 100 shown in FIG. 2, except that only locations of a first fuse hole 125 and a first fuse protrusion 126 of a first collector plate 120 and a second fuse hole 135 and a second fuse protrusion (not shown) of a second collector plate 130 are different from the locations of the corresponding components of the rechargeable battery 100 shown in FIG. 2, duplicated descriptions thereof will be omitted. In the following description, the rechargeable battery will be described with emphasis imposed on the first fuse hole 125 and the first fuse protrusion 126 of the first collector plate 120 and the second fuse hole 135 and the second fuse protrusion.

Referring to FIGS. 6 through 8, the rechargeable battery 200 includes an electrode assembly 10, a first collector plate 120, a second collector plate 130, a case 40, and a cap assembly 50.

Referring to FIG. 6 and 7, the first collector plate 120 may include a first connection part 21, a first extension part 23, a first terminal hole 24, a first fuse hole 125, and a first fuse protrusion 126.

The first fuse hole 125 and the first fuse protrusion 126 are substantially the same as the first fuse hole 25 and the first fuse protrusion 26 shown in FIGS. 2 and 3A, respectively, in view of their configurations and functions, except that the first fuse hole 125 and the first fuse protrusion 126 are formed on an upper surface of the first extension part 23 where a contact with an electrolyte is prevented to the minimum, that is, on a first fuse section Sf in the close proximity of a corner C. Here, the first fuse protrusion 126 is bent and extends toward the electrode assembly 10. Alternatively, the first fuse protrusion 126 may also be bent and extend toward the case 40. Meanwhile, a first contact section Sc in the first extension part 23 corresponds to an area that is practically in contact with a first electrode uncoated portion 11 a.

The second collector plate 130 may include a second connection part 31, a second extension part 33, a second terminal hole 34, a second fuse hole 135, and a second fuse protrusion (not shown). The second fuse hole 135 and the second fuse protrusion have substantially the same as the first fuse hole 125 and the second fuse protrusion 126 in view of their configurations and functions, respectively.

As described above, in the rechargeable battery 200 according to another embodiment of the present invention, the first fuse hole 125 and the first fuse protrusion 126 are formed in the first extension part 23 of the first collector plate 120, or the second fuse hole 135 and the second fuse protrusion are formed in the second extension part 33 of the second collector plate 130, thereby effectively preventing interference between the first fuse protrusion 126 and the cap assembly 50 or interference between the second fuse protrusion and the cap assembly 50.

A rechargeable battery according to still another embodiment of the present invention will now be described.

FIG. 9 is a perspective view of a first collector plate corresponding to that of FIG. 3A in a rechargeable battery according to still another embodiment of the present invention.

Since configurations and functions of the rechargeable battery are substantially the same as those of the rechargeable battery 100 shown in FIG. 2, except that only the configuration of a first fuse protrusion 226 of a first collector plate 220 is different from that of the first fuse protrusion 126 of the first collector plate 120 of the rechargeable battery 100 shown in FIG. 2, duplicated descriptions thereof will be omitted. In the following description, the rechargeable battery will be described with emphasis imposed on the first fuse protrusion 226 of the first collector plate 220.

Referring to FIG. 9, the first collector plate 220 may include a first connection part 21, a first extension part 23, a first terminal hole 24, a first fuse hole 25, and a first fuse protrusion 226.

The first fuse protrusion 226 is substantially the same as the first fuse protrusion 26 shown in FIG. 3A, except that the first fuse protrusion 226 further includes at least one first auxiliary groove 227 formed on its side surface. The first auxiliary groove 227 reduces a section where the first fuse protrusion 226 is formed without considerably lowering a strengthening function of the first fuse protrusion 226. Accordingly, the first auxiliary groove 227 may increase a duration of time in which a current flow through the section of the first fuse protrusion that has become narrow when the current flowing through a path between the first connection part 21 and the first extension part 23 is allowed to detour to the first fuse protrusion 226. Accordingly, the first fuse protrusion 26 allows a larger amount of heat to be generated due to an electrical short-circuit of the rechargeable battery, thereby increasing the reliability of the first fuse hole 25 in view of its functionality as a fuse. Meanwhile, a second collector plate (not shown) may be formed to correspond to the first collector plate 220.

As described above, in the rechargeable battery according to still another embodiment of the present invention, at least one first auxiliary groove 227 is formed on the first fuse protrusion 226, thereby increasing the reliability of the first fuse hole 25 in view of its functionality as a fuse without considerably degrading the strengthening capability of the first fuse protrusion 226.

Although the present invention has been described with reference to the preferred examples, the foregoing disclosure should be interpreted as illustrative only and it should be understood that various modifications and equivalent embodiments can be easily made by those skilled in the art without departing from the invention. Accordingly, the true scope of the invention is defined by the following claims.

## Claims

1. A rechargeable battery (100, 200) comprising:
at least one electrode assembly (10) having a first electrode plate (11) and a second electrode plate (12) with a separator (13) interposed there between;
a first collector plate (20, 20', 120, 220) electrically connected to the first electrode plate (11) and a second collector plate (30) electrically connected to the second electrode plate (12), wherein at least one of the first collector plate (20, 20', 120, 220) and the second collector plate (30) comprises a fuse section (Sf) with a fuse hole (25, 35, 125) formed therein;
a case (40) accommodating the electrode assembly (10), the first collector plate (20, 20', 120, 220) and the second collector plate (30);
wherein the at least one collector plate (20, 20', 30, 120, 220) which comprises the fuse hole (25, 35, 125) further comprises at least one fuse protrusion (26, 26', 126, 226) extending from an end portion of the fuse section (Sf);
**characterized in that**
the at least one collector plate (20, 20', 30, 120, 220) further comprises:
a connection part (21) located between the electrode assembly (10) and a cap assembly (50) coupled to the case and having a cap plate (51),
an extension part (23) extending perpendicular from the connection part (21) to form a corner portion (C) of the collector plate (20, 20', 30, 120, 220) and contacting one of the first and second electrode plates (11, 12);
the fuse section (Sf) is located proximate to the corner portion (C);
the fuse hole (25, 35, 125) and the fuse protrusion (26, 26', 126, 226) are formed in the connection part (21); and
a width (We) of the extension part (23) is greater than a width (Wc) of the connection part (21).

2. The rechargeable battery (100, 200) of claim 1, wherein the at least one fuse protrusion (26, 26', 126, 226) is bent with respect to a surface of the fuse section (Sf) in which the fuse hole (25, 125) is formed.

3. The rechargeable battery (100, 200) according to any one of the preceding claims, wherein a terminal hole (24) is formed in the connection part (21).

4. The rechargeable battery (100, 200) according to any one of the preceding claims, wherein a cross-sectional area of the fuse section (Sf) is smaller than a cross-sectional area of other portions of the at least one collector plate (20, 20'. 30, 120, 220) and/or wherein a minimum distance (D) between a starting portion of the fuse protrusion (26, 26', 126, 226) and the fuse hole (25) ranges from 1 mm to 5 mm.

5. The rechargeable battery (100, 200) according to any one of the preceding claims, wherein the at least one collector plate (20, 20', 30, 120, 220) comprises two fuse protrusions (26, 26', 126, 226) located on opposite end portions of the fuse section (Sf).

6. The rechargeable battery (100, 200) according to any one of the preceding claims, wherein the connection part (21) and/or the extension part (23) comprise a plate shape.

7. The rechargeable battery (100, 200) according to any one of the preceding claims, wherein the at least one fuse protrusion (226) further comprises at least one first auxiliary groove (227) formed on its side surface.

8. The rechargeable battery (100, 200) according to any one of the preceding claims, wherein the fuse hole (25, 35, 125) is elongated in a width direction extending toward the at least one fuse protrusion (26, 26', 126, 226).

9. The rechargeable battery (100, 200) according to any one of the preceding claims wherein a lengthwise extension of the at least one fuse protrusion (26, 26', 126, 226) is greater than a lengthwise extension of the fuse hole (25, 35, 125).

10. The rechargeable battery (100, 200) according to any one of the preceding claims, wherein the cap assembly (50) comprises:
a first electrode terminal (52) passing through the cap plate (51) and contacting a first collector plate (20, 20', 30, 120, 220); and a
second electrode terminal (53) passing through the cap plate (51) and contacting a second collector plate (30),
wherein the at least one fuse protrusion (26, 26', 126, 226) is bent toward or away from the cap assembly (50).

11. The rechargeable battery (100, 200) according to any one of the preceding claims, wherein the cap assembly (50) comprises:
a convex reversible first short circuit plate (60) accommodated in a short circuit opening (51 c) on the cap plate (50); and
a second short circuit plate (61) electrically coupled to one of the collector plates (20, 20', 30, 120, 220) and located on an exterior of the case (40),
the second short circuit plate (61) being spaced apart from the cap plate (51) and covering the short circuit hole (51 c).

12. A vehicle comprising the rechargeable battery (100, 200) according to any one of claims 1 to 11.

## Patentansprüche

1. Wiederaufladbare Batterie (100, 200), aufweisend:
zumindest eine Elektrodenanordnung (10), die eine erste Elektrodenplatte (11) und eine zweite Elektrodenplatte (12) aufweist, wobei ein Separator (13) zwischen ihnen angeordnet ist;
eine erste Kollektorplatte (20, 20', 120, 220), die mit der ersten Elektrodenplatte (11) elektrisch verbunden ist, und eine zweite Kollektorplatte (30), die mit der zweiten Elektrodenplatte (12) elektrisch verbunden ist, wobei zumindest eine der ersten Kollektorplatte (20, 20`, 120, 220) und der zweiten Kollektorplatte (30) einen Sicherungsabschnitt (Sf) mit einem darin ausgebildeten Sicherungsloch (25, 35, 125) aufweist;
ein Gehäuse (40), das die Elektrodenanordnung (10), die erste Kollektorplatte (20, 20`, 120, 220) und die zweite Kollektorplatte (30) aufnimmt;
wobei die zumindest eine Kollektorplatte (20, 20`, 30, 120, 220), die das Sicherungsloch (25, 35, 125) aufweist, weiterhin zumindest einen Sicherungsvorsprung (26, 26', 126, 226) aufweist, der sich von einem Endabschnitt des Sicherungsabschnitts (Sf) erstreckt;
**dadurch gekennzeichnet, dass**
die zumindest eine Kollektorplatte (20, 20', 30, 120, 220) weiterhin aufweist:
einen Verbindungsteil (21), der sich zwischen der Elektrodenanordnung (10) und einer Abdeckanordnung (50) befindet, die an das Gehäuse gekoppelt ist und eine Abdeckplatte (51) aufweist,
einen Verlängerungsteil (23), der sich senkrecht vom Verbindungsteil (21) erstreckt, so dass ein Eckabschnitt (C) der Kollektorplatte (20, 20`, 30, 120, 220) ausgebildet wird, und der mit einer der ersten und zweiten Elektrodenplatte (11, 12) in Kontakt steht;
der Sicherungsabschnitt (Sf) sich nahe dem Eckabschnitt (C) befindet;
das Sicherungsloch (25, 35, 125) und der Sicherungsvorsprung (26, 26`, 126, 226) im Verbindungsteil (21) ausgebildet sind; und
eine Breite (We) des Verlängerungsteils (23) größer als eine Breite (Wc) des Verbindungsteils (21) ist.

2. Wiederaufladbare Batterie (100, 200) nach Anspruch 1, wobei der zumindest eine Sicherungsvorsprung (26, 26', 126, 226) bezüglich einer Oberfläche des Sicherungsabschnitts (Sf), in dem das Sicherungsloch (25, 125) ausgebildet ist, gebogen ist.

3. Wiederaufladbare Batterie (100, 200) nach einem der vorhergehenden Ansprüche, wobei ein Anschlussloch (24) im Verbindungsteil (21) ausgebildet ist.

4. Wiederaufladbare Batterie (100, 200) nach einem der vorhergehenden Ansprüche, wobei eine Querschnittfläche des Sicherungsabschnitts (Sf) kleiner als eine Querschnittfläche anderer Abschnitte der zumindest einen Kollektorplatte (20, 20`, 30, 120, 220) ist und/oder wobei ein kleinster Abstand (D) zwischen einem Anfangsabschnitt des Sicherungsvorsprungs (26, 26', 126, 226) und dem Sicherungsloch (25) im Bereich von 1 mm bis 5 mm liegt.

5. Wiederaufladbare Batterie (100, 200) nach einem der vorhergehenden Ansprüche, wobei die zumindest eine Kollektorplatte (20, 20', 120, 220) zwei Sicherungsvorsprünge (26, 26', 126, 226) aufweist, die sich auf einander gegenüberliegenden Endabschnitten des Sicherungsabschnitts (Sf) befinden.

6. Wiederaufladbare Batterie (100, 200) nach einem der vorhergehenden Ansprüche, wobei der Verbindungsteil (21) und/oder der Verlängerungsteil (23) eine Plattenform aufweisen/aufweist.

7. Wiederaufladbare Batterie (100, 200) nach einem der vorhergehenden Ansprüche, wobei der zumindest eine Sicherungsvorsprung (226) weiterhin zumindest eine erste Hilfsnut (227) aufweist, die auf seiner Seitenfläche ausgebildet ist.

8. Wiederaufladbare Batterie (100, 200) nach einem der vorhergehenden Ansprüche, wobei das Sicherungsloch (25, 35, 125) in eine Breitenrichtung verlängert ist, die sich zu dem zumindest einen Sicherungsvorsprung (26, 26`, 126, 226) erstreckt.

9. Wiederaufladbare Batterie (100, 200) nach einem der vorhergehenden Ansprüche, wobei eine Längserstreckung des zumindest einen Sicherungsvorsprungs (26, 26`, 126, 226) größer als eine Längserstreckung des Sicherungslochs (25, 35, 125) ist.

10. Wiederaufladbare Batterie (100, 200) nach einem der vorhergehenden Ansprüche, wobei die Abdeckanordnung (50) aufweist:
einen ersten Elektrodenanschluss (52), der durch die Abdeckplatte (51) verläuft und mit einer ersten Kollektorplatte (20, 20', 30, 120, 220) in Kontakt steht; und einen
zweiten Elektrodenanschluss (53), der durch die Abdeckplatte (51) verläuft und mit einer zweiten Kollektorplatte (30) in Kontakt steht,
wobei der zumindest eine Sicherungsvorsprung (26, 26', 126, 226) zur Abdeckanordnung (50) hin oder von ihr weg gebogen ist.

11. Wiederaufladbare Batterie (100, 200) nach einem der vorhergehenden Ansprüche, wobei die Abdeckanordnung (50) aufweist:
eine erste konvexe reversible Kurzschlussplatte (60), die in einer Kurzschlussöffnung (51c) auf der Abdeckplatte (50) aufgenommen ist; und
eine zweite Kurzschlussplatte (61), die mit einer der Kollektorplatten (20, 20`, 30, 120, 220) elektrisch gekoppelt ist und sich auf einer Außenseite des Gehäuses (40) befindet,
wobei die zweite Kurzschlussplatte (61) von der Abdeckplatte (51) beabstandet ist und das Kurzschlussloch (51 c) bedeckt.

12. Fahrzeug, aufweisend die wiederaufladbare Batterie (100, 200) nach einem der Ansprüche 1 bis 11.

## Revendications

1. Batterie rechargeable (100, 200), comprenant :
au moins un assemblage d'électrodes (10) comportant une première plaque servant d'électrode (11) et une seconde plaque servant d'électrode (12) avec un séparateur (13) interposé entre celles-ci ;
une première plaque collectrice (20, 20', 120, 220) connectée électriquement à la première plaque servant d'électrode (11) et une seconde plaque collectrice (30) connectée électriquement à la seconde plaque servant d'électrode (12), au moins une des première plaque collectrice (20, 20', 120, 220) et seconde plaque collectrice (30) comprenant une section fusible (Sf) avec un trou de fusion (25, 35, 125) formé dans celle-ci ;
un boîtier (40) recevant l'assemblage d'électrodes (10), la première plaque collectrice (20, 20', 120, 220) et la seconde plaque collectrice (30) ;
dans laquelle au moins une plaque collectrice (20, 20', 30, 120, 220) qui comprend le trou de fusion (25, 35, 125) comprend en outre au moins une protubérance fusible (26, 26', 126, 226) s'étendant à partir d'une portion terminale de la section fusible (Sf) ;
**caractérisée en ce que**
ladite au moins une plaque collectrice (20, 20', 30, 120, 220) comprend en outre :
une partie de connexion (21) située entre l'assemblage d'électrodes (10) et un assemblage servant de coiffe (50) couplé au boîtier et comportant une plaque de coiffe (51),
une partie d'extension (21) s'étendant perpendiculairement à partir de la partie connectrice (21) pour former une portion d'angle (C) de la plaque collectrice (20, 20', 30, 120, 220) et entrant en contact avec la une des première et seconde plaques servant d'électrodes (11, 12) ;
la section fusible (Sf) est située à proximité de la portion d' angle (C) ;
le trou de fusion (25, 35, 125) et la protubérance fusible (26, 26', 126, 226) sont formés dans la partie de connexion (21) ; et
la largeur (We) de la partie d'extension (23) est supérieure à la largeur (Wc) de la partie connectrice (21).

2. Batterie rechargeable (100, 200) suivant la revendication 1, dans laquelle ladite au moins une protubérance fusible (26, 26', 126, 226) est fléchie par rapport à une surface de la section fusible (Sf) dans laquelle le trou de fusion (25, 125) est formé.

3. Batterie rechargeable (100, 200) suivant l'une quelconque des revendications précédentes, dans laquelle un trou de borne (24) est formé dans la partie connectrice (21).

4. Batterie rechargeable (100, 200) suivant l'une quelconque des revendications précédentes, dans laquelle une surface en section transversale de la section fusible (Sf) est inférieure à une surface en section transversale des autres parties de ladite au moins une plaque collectrice (20, 20', 30, 120, 220) et/ou dans laquelle une distance minimale (D) entre une portion de départ de la protubérance fusible (26, 26', 126, 226) et le trou de fusion (25) va de 1 mm à 5 mm.

5. Batterie rechargeable (100, 200) suivant l'une quelconque des revendications précédentes, dans laquelle ladite au moins une plaque collectrice (20, 20', 30, 120, 220) comprend deux protubérances fusibles (26, 26', 126, 226) situées sur les portions terminales opposées de la section fusible (Sf).

6. Batterie rechargeable (100, 200) suivant l'une quelconque des revendications précédentes, dans laquelle la partie connectrice (21) et/ou la partie d'extension (23) ont une forme de plaque.

7. Batterie rechargeable (100, 200) suivant l'une quelconque des revendications précédentes, dans laquelle ladite au moins une protubérance fusible (226) comprend en outre au moins une première rainure auxiliaire (227) formée sur sa surface latérale.

8. Batterie rechargeable (100, 200) suivant l'une quelconque des revendications précédentes, dans laquelle le trou de fusion (25, 35, 125) est allongé dans une direction de largeur s'étendant vers ladite au moins une protubérance fusible (26, 26', 126, 226).

9. Batterie rechargeable (100, 200) suivant l'une quelconque des revendications précédentes, dans laquelle une extension en direction de la longueur de ladite au moins une protubérance fusible (26, 26', 126, 226) est supérieure à l'extension en direction de la longueur du trou de fusion (25, 35, 125).

10. Batterie rechargeable (100, 200) suivant l'une quelconque des revendications précédentes, dans laquelle l'assemblage servant de coiffe (50) comprend :
une première borne d'électrode (52) passant à travers la plaque de coiffe (51) et entrant en contact avec une première plaque collectrice (20, 20', 30, 120, 220) ; et
une seconde borne d'électrode (53) passant à travers la plaque de coiffe (51) et entrant en contact avec une seconde plaque collectrice (30),
ladite au moins une protubérance fusible (26, 26', 126, 226) étant fléchie vers ou à l'opposé de l'assemblage de coiffe (50).

11. Batterie rechargeable (100, 200) suivant l'une quelconque des revendications précédentes, dans laquelle l'assemblage servant de coiffe (50) comprend :
une première plaque réversible convexe de court-circuit (60) logée dans un orifice de court-circuit (51c) sur la plaque de coiffe (50) ; et
une seconde plaque de court-circuit (61) couplée électriquement à une des plaques collectrices (20, 20', 30, 120, 220) et située sur l'extérieur du boîtier (40),
la seconde plaque de court-circuit (61) étant espacée de la plaque de coiffe (51) et couvrant le trou de court-circuit (51c).

12. Véhicule comprenant la batterie rechargeable (100, 200) suivant l'une quelconque des revendications 1 à 11.
